# EUROPÄISCHE PATENTSCHRIFT

(11) **EP 3 003 719 B1**
(45) Veröffentlichungstag und Bekanntmachung des Hinweises auf die Patenterteilung: **14.12.2016**
(21) Anmeldenummer: 13726707.6
(22) Anmeldetag: 24.05.2013
(51) Int. Cl.: B32B 27/30, C08F 222/08, C08L 33/12, C08L 35/06

(54) **VERBUNDSYSTEM MIT HOHER SCHLAGZÄHIGKEIT UND WÄRMEFORMBESTÄNDIGKEIT**
COMPOSITE SYSTEM WITH HIGH IMPACT STRENGTH AND A HIGH SOFTENING POINT
SYSTÈME COMPOSITE À RÉSISTANCE AUX CHOCS ET RÉSISTANCE À LA DÉFORMATION À CHAUD ÉLEVÉES

(43) Veröffentlichungstag der Anmeldung: 13.04.2016
(73) Patentinhaber: Evonik Röhm GmbH, 64293 Darmstadt (DE)
(72) Erfinder: CARLOFF, Rüdiger, 64291 Darmstadt (DE); DIETRICH, Gerald, 64665 Alsbach-Hähnlein (DE); WICKER, Michael, 64342 Seeheim-Jugenheim (DE); CHEN, Chih-Lung, 10588 Taipei City (TW)
(86) Internationale Anmeldenummer: PCT/EP2013/060702
(87) Internationale Veröffentlichungsnummer: WO 2014/187500

(56) Entgegenhaltungen:
- CN-A- 101 759 945
- JP-A- S5 998 156

## Beschreibung

Die vorliegende Erfindung betrifft ein Verbundsystem, vorzugsweise eine Mehrschichtfolie, mit einer hohen Schlagzähigkeit und Wärmeformbeständigkeit und einem Verfahren zu seiner Herstellung sowie deren Verwendung.

### Stand der Technik

Verbundsysteme, vorzugsweise Mehrschichtfolien, werden in Display Frontplatten, in mobilen Displays wie z.B. bei tragbaren Telefonen, Smartphones und Eingabeterminals sowie bei Anzeigentafeln eingesetzt. Weiterhin werden Verbundsysteme, vorzugsweise Mehrschichtfolien als Automobilverscheibungen, Automobilkarosserien, bei Spielekonsolen und Carports verwendet.

Verschiedene Ausführungsformen von Verbundsystemen aufgebaut aus verschiedenen Polymertypen sind bekannt. Wichtige Forderungen sind dabei eine gute Schlagzähigkeit, eine hohe optische Transparenz und eine gute Oberflächenhärte. Weiterhin soll eine hohe Kratzfestigkeit vorhanden sein. Bei der Anwendung von Verbundsystemen, vorzugsweise Mehrschichtfolien sind zusätzlich eine geringe Verwerfung der Mehrschichtfolie bei hohen Temperaturen und hoher Luftfeuchtigkeit eine wichtige Eigenschaft.

Bei der Anwendung eines Verbundsystems bzw. einer Mehrschichtfolien als Frontplatte in Displays, sitzt das Verbundsystem bzw. die Mehrschichtfolie vor der eigentlichen Anzeigeneinheit wie z.B. einem OLED (Organic Light Emitting Diode) oder einem LCD-Panel (Liquid Crystal Display). Auf diesen Anzeigeneinheiten soll das Verbundsystem bzw. die Mehrschichtfolie eben aufliegen. Ein Verzug des Verbundsystems bzw. der Mehrschichtfolie durch Umgebungseinflüsse ist daher unerwünscht, da dann Druck auf die unterlegte LCD-Einheit ausgeübt wird, der zu starken Farbstrukturen führt.

Der Verzug bzw. die Verwerfung eines Verbundsystems bzw. einer Mehrschichtfolie während des Einsatzes kann unter anderem auf eine zu hohe Betriebs- oder Umgebungstemperatur zurückgeführt werden.

Um die Schlagzähigkeit des Verbundes / der Folie zu erhöhen, kann eine Schicht des Verbundes / der Folie z.B. aus Polycarbonat (PC) bestehen. Polycarbonatschichten bzw. - folien zeichnen sich durch eine hohe Schlagzähigkeit und eine hohe Wärmeformbeständigkeit aus. Nachteilig bei Polycarbonat ist allerdings seine geringe Oberflächenhärte und Kratzfestigkeit. Um die Kratzfestigkeit und die Oberflächenhärte zu erhöhen, kann PC mit Polymethylmethacrylat (PMMA) laminiert werden.

Polymethylmethacrylat (PMMA) besitzt in der Regel eine höhere Oberflächenhärte als Polycarbonat und eine bekanntlich sehr gute Witterungsbeständigkeit, die auch als Schutz für das Polycarbonat genutzt werden kann.

Durch Lamination von PC mit Polymethylmethacrylat besitzt die erhaltene Mehrschichtfolie bzw. der Verbund eine hohe Schlagzähigkeit und eine hohe Oberflächenhärte auf der PMMA-Seite. Allerdings ist die Wärmeformbeständigkeit des PMMA gegenüber dem PC häufig deutlich niedriger, so dass es bei höheren Temperaturen zu Verwerfungen der Folie / des Verbundes kommt.

Im Stand der Technik ist bekannt, dass der Verwerfung durch Anheben der Wärmeformbeständigkeit der PMMA-Schicht begegnet werden kann, z.B. JP 2009 196125A.

Beispielhaft wird in JP 2009 196125A eine Mehrschichtfolie aus einer Schicht Polymethacrylat-Copolymer und einer Polycarbonatschicht für Displayanwendungen beschrieben. Um die Wärmeformbeständigkeit des Polymethacrylates zu erhöhen wird ein spezielles Polymethacrylat-Copolymer beschrieben. Bei dem Polymethacrylat-Copolymer handelt es sich um ein Copolymer aus einem (Meth)acrylat und einem cyclischen Vinyl-Monomer. Im Beispiel von JP 2009 196125A wird Vinylcyclohexan genannt.

Es ist weiter bekannt, dass die Herstellung eines Polymethacrylates - wie in JP 2009 196125A beschrieben - sehr aufwändig ist, da die beanspruchten cyclischen Vinylmonomere nicht gut radikalisch mit anderen (Meth)acrylaten polymerisieren.

Die radikalische Copolymerisation von radikalisch polymerisierbaren Monomeren wie (Meth)acrylaten ist eine einfache bekannte und kostengünstige Methode zur Herstellung von z.B. Polymethacrylaten.

In EP 168 0276B1 wird eine Mehrschichtfolie aus Polycarbonat und einem Polymethacrylat beschrieben, mit Cyclohexylmethacrylat als Comonomer im Polymethacrylat. Das Polymethacrylat mit Cyclohexylmethacrylat besitzt aufgrund der cyclischen Estergruppe gegenüber einem Standard-PMMA eine bessere Verträglichkeit zum PC. Allerdings wird die Wärmeformbeständigkeit des Polymethacrylates durch das Cyclohexylmethacrylat nicht nennenswert erhöht.

Weiterhin ist aus DE 44 40 219A1 bekannt, dass ein Copolymer erhalten aus der Copolymerisation von Methylmethacrylat und Styrol und Maleinsäureanhydrid die Wärmeformbeständigkeit erhöht. Die gemäß DE 44 40 219A1 bekannten Methylmethacrylat-Styrol-Maleinsäureanhydrid-Copolymere zeigen zwar eine höhere Wärmeformbeständigkeit, jedoch werden bei der Laminierung auf PC hohe Verwerfungsgrade erzielt.

### Aufgabe und Lösung

In Anbetracht des hierin angegebenen und diskutierten Stand der Technik war es mithin Aufgabe der vorliegenden Erfindung, ein Verbundsystem, vorzugsweise eine Mehrschichtfolie zu entwickeln, die leicht herstellbar ist, eine gute Schlagzähigkeit und eine geringere Verwerfung bei höheren Temperaturen zeigt als eine im Stand der Technik bekannte Mehrschichtfolie aus Polycarbonat und einem Standard-PMMA, wobei jedoch gleichzeitig eine, wie gemäß DE 44 40 219A1 bekannt, hohe Wärmeformbeständigkeit erreicht wird.

Weiter bestand die Aufgabe darin, ein Verbundsystem bzw. eine Mehrschichtfolie gemäß obigen Anforderungen bereit zu stellen, das ebenso eine gute Haftung innerhalb des Verbundsystems bzw. der Mehrschichtfolie, d.h. eine gute Haftung zwischen den einzelnen Schichten, aufweist.

Eine zusätzliche Aufgabe bestand darin, das Verbundsystem bzw. die Mehrschichtfolie so auszugestalten, dass die äußeren Seite bzw. Schichten des Verbundsystems bzw. der Mehrschichtfolie jeweils mit einem funktionellen Lack beschichtbar sind.

Diese Aufgaben sowie weitere, die zwar nicht explizit genannt werden, sich aber aus den hierin diskutierten Zusammenhängen ableiten lassen oder sich aus diesen ergeben, werden überraschend gelöst durch ein Verbundsystem umfassend:
- a) eine Polymerblend-Schicht umfassend oder bestehend aus
   A) einem (Meth)acrylat(co)polymer oder einer Mischung von (Meth)acrylat(co)polymeren und
   B) einem Styrol-Maleinsäureanhydrid-(Co)Polymer,
   wobei der Anteil an Maleinsäureanhydrid-Wiederholungseinheiten in dem Styrol-Maleinsäureanhydrid-(Co)Polymer B) 10 bis 30 Gew.-%, vorzugsweise 15 bis 28 Gew.-%, bevorzugt 20 bis 26 Gew.-%, jeweils bezogen auf das Gesamtgewicht des Styrol-Maleinsäureanhydrid-(Co)Polymers B), beträgt, und
   wobei der Anteil an Maleinsäureanhydrid-Wiederholungseinheiten in der Polymerblend-Schicht a) 1 bis 27 Gew.-%, vorzugsweise 1,5 bis 25 Gew.-%, bevorzugt 2 bis 23 Gew.-%, jeweils bezogen auf das Gesamtgewicht der Polymerblend-Schicht a), beträgt, und
   wobei das Styrol-Maleinsäureanhydrid-(Co)Polymer B) hergestellt ist aus einer Monomermischung umfassend Styrol, Maleinsäureanhydrid und 0 bis 50 Gew.-% mit Styrol und / oder Maleinsäureanhydrid copolymerisierbaren Vinylmonomere, bezogen auf das Gesamtgewicht an Maleinsäureanhydrid im Styrol-Maleinsäureanhydrid-(Co)Polymer B),
- b) optional eine oder mehrere Klebschichten, Glasschichten und/oder optische Folien, vorzugsweise eine oder mehrere Kleb-Schichten, bevorzugt mindestens eine Kleb-Schicht eines optical clear adhesive (OCA) oder eines pressure sensitive adhesive (PSA), und
- c) eine Glas- oder Kunststoff-Schicht, vorzugsweise eine Kunststoff-Schicht, bevorzugt eine Polycarbonat-Schicht,
wobei a) und c) miteinander verbunden sind oder die eine oder mehrere Schichten b) die beiden Schichten a) und c) miteinander verbinden.

Dabei kann die Monomermischung, aus der das Styrol-Maleinsäureanhydrid-(Co)Polymer B) hergestellt wird, neben Styrol, Maleinsäureanhydrid und 0 bis 50 Gew.-% mit Styrol und / oder Maleinsäureanhydrid copolymerisierbaren Vinylmonomeren, bezogen auf das Gesamtgewicht an Maleinsäureanhydrid im Styrol-Maleinsäureanhydrid-(Co)Polymer B), weitere Bestandteile, wie z.B. Additive enthalten.

Für eine besondere Ausführungsform der vorliegenden Erfindung besteht die Monomermischung, aus der das Styrol-Maleinsäureanhydrid-(Co)Polymer B) hergestellt wird, aus Styrol, Maleinsäureanhydrid und 0 bis 50 Gew.-% mit Styrol und / oder Maleinsäureanhydrid copolymerisierbaren Vinylmonomeren, bezogen auf das Gesamtgewicht an Maleinsäureanhydrid im Styrol-Maleinsäureanhydrid-(Co)Polymer B).

Überraschenderweise wurde gefunden, dass durch die Herstellung eines Blend aus einem (Meth)acrylat(co)polymer oder einer Mischung von (Meth)acrylat(co)polymeren A) und einem Styrol-Maleinsäureanhydrid-(Co)Polymer B) gemäß den obigen Angaben und anschliessendem Aufbringen, vorzugsweise Laminieren, auf eine Glas- oder Kunststoffschicht, vorzugsweise eine Polycarbonat-Schicht, zum einen die Wärmeformbeständigkeit des PMMA vergleichbar erhöht wird wie durch eine Erzeugung eines Copolymers aus Methylmethacrylat (MMA) und Maleinsäureanhydrid und Styrol und zum anderen, dass die Anforderungen an eine gute Verträglichkeit mit der Kunststoff- oder Glasschicht, vorzugsweise der Polycarbonat-Schicht, erfüllt werden und zudem eine geringere Verwerfung des Verbundes, vorzugsweise des Laminates, erzielt wird als aus dem Stand der Technik mit bekannten Verbundsystemen bzw. Laminaten bekannt und erwartbar war.

### (Meth)acrylat(co)polymer oder Mischung von (Meth)acrylat(co)polymeren A) = Polymer A)

Die beschriebenen Polymere gemäß A) werden im Allgemeinen durch radikalische Polymerisation von Mischungen erhalten, die Methylmethacrylat enthalten. Im Allgemeinen enthalten diese Mischungen mindestens 30 Gew.-%, vorzugsweise mindestens 50 Gew.-%, bevorzugt mindestens 80 Gew.-%, weiter bevorzugt mindestens 90 Gew.-% und ganz besonders bevorzugt mindestens 95 Gew.-%, bezogen auf das Gewicht der Monomere, Methylmethacrylat. Eine besonders hohe Qualität zeigen insbesondere Polymere, die im Wesentlichen aus Polymethylmethacrylat bestehen.

Daneben können diese Mischungen zum Erhalten der Polymere A) weitere (Meth)acrylate enthalten, die mit Methylmethacrylat copolymerisierbar sind. Der Ausdruck (Meth)acrylate umfasst Methacrylate und Acrylate sowie Mischungen aus beiden.

Erfindungsgemäß können die zu polymerisierenden Zusammensetzungen neben den obigen (Meth)acrylaten auch weitere ungesättigte Monomere aufweisen, die mit Methylmethacrylat und den zuvor genannten (Meth)acrylaten copolymerisierbar sind. Hierzu gehören unter anderem Alkyl(meth)acrylate, Methylacrylat, Ethylacrylat, Butylacrylat, Cyclohexyl(meth)acrylat, Norbornyl(meth)acrylat, Styrol, substituierte Styrole, Vinylcyclohexan, Vinylacetat, (Meth)acrylsäure, Glutarsäureanhydrid, Maleinsäureanhydrid, n-Isopropyl(meth)acrylamid, (Meth)acrylamid und Acrylnitril. Vorzugsweise sind in den Mischungen zum Erhalten der Polymere A) die Comonomere (Meth)acrylsäure, Glutarsäureanhydrid, Maleinsäureanhydrid, n-Isopropyl(meth)acrylamid, (Meth)acrylamid und Acrylnitril neben den weiteren oben genannten Monomeren nur zu einem Gesamtgewichtsanteil von max. 8 Gew.-%, bezogen auf den Gewichtsanteil des Styrol-Maleinsäureanhydrid-(Co)Polymer B) in der Polymerblend-Schicht a), enthalten. Die Vinylcylohexan-Wiederholungseinheiten im Polymer A) können auch durch Hydrierung des Benzolringes eines Methylmethacrylat-Styrol-Copolymeren erhalten werden, da sich Vinylcyclohexan nur schlecht mit Methylmethacrylat radikalisch copolymerisieren läßt. Alle dargelegten Monomere werden bevorzugt in einer hohen Reinheit eingesetzt.

Weiterhin kann Polymer A) ein Blend aus verschiedenen Polymeren des Typs A) sein.

Das Gewichtsmittel des mittleren Molekulargewichtes M_{w} des Polymeren A) liegt vorzugsweise zwischen 50 000 und 500 000 g/mol, bevorzugt zwischen 60 000 und 300 000 g/mol und besonders bevorzugt zwischen 80 000 und 200 000 g/mol, ohne dass hierdurch eine Einschränkung erfolgen soll.

### Styrol-Maleinsäureanhydrid-(Co)Polymer B) = Polymer B)

Das erfindungsgemäße Verbundsystem ist vorzugsweise dadurch gekennzeichnet, dass das Styrol-Maleinsäureanhydrid-(Co)Polymer B) einen Anteil an Styrol-Wiederholungseinheiten von 55 bis 90 Gew.-%, vorzugsweise 58 bis 85 Gew.-%, bevorzugt 61 bis 80 Gew.-%, jeweils bezogen auf das Gesamtgewicht des Styrol-Maleinsäureanhydrid-(Co)Polymers B), besitzt.

Für den Fall, dass in einem erfindungsgemäßen Verbundsystem das Styrol-Maleinsäureanhydrid-(Co)Polymer B)) hergestellt ist aus einer Monomermischung umfassend bis zu 50 Gew.-% mit Styrol und / oder Maleinsäureanhydrid copolymerisierbaren Vinylmonomere, bezogen auf das Gesamtgewicht an Maleinsäureanhydrid im Styrol-Maleinsäureanhydrid-(Co)Polymer B), sind diese Vinylmonomere vorzugsweise ausgewählt aus der Gruppe bestehend aus Methyl(meth)acrylat, Alkyl(meth)acrylaten, Methylacrylat, Ethylacrylat, Butylacrylat, Cyclohexyl(meth)acrylaten, Norbornyl(meth)acrylaten, Vinylcyclohexanen.

Das Gewichtsmittel des Molekulargewichts M_{w} des erfindungsgemäß zu verwendenden Styrol-Maleinsäureanhydrid-(Co)Polymer B) kann in weiten Bereichen schwanken, wobei das Molekulargewicht üblicherweise auf den Anwendungszweck und die Verarbeitungsweise abgestimmt wird. Im Allgemeinen liegt es aber im Bereich zwischen 40 000 und 500 000 g/mol, vorzugsweise 50 000 bis 300 000 g/mol und besonders bevorzugt 70 000 bis 150 000 g/mol, ohne dass hierdurch eine Einschränkung erfolgen soll.

In einer bevorzugten Ausführungsform des erfindungsgemäßen Verbundsystems hat das Styrol-Maleinsäureanhydrid-(Co)Polymer B) ein mittleres Molekulargewicht von mindestens M_{w} = 70 000 g/mol.

Das Styrol-Maleinsäureanhydrid-(Co)Polymer B) gemäß der vorliegenden Erfindung ist vorzugsweise hergestellt gemäß einem Verfahren, das im Folgenden in der Beschreibung des erfindungsgemäßen Beispiels erläutert wird.

### Polymerblend-Schicht a)

Bei den zur Herstellung der erfindungsgemäß hergestellten Verbundsystemen verwendeten Polymerblends a) handelt es sich vorzugsweise um Polymer-Mischungen eines (Meth)acrylat(co)polymers oder einer Mischung von (Meth)acrylat(co)polymeren A) (= Polymer A)) und einem Styrol-Maleinsäureanhydrid-(Co)Polymer B) (= Polymer B)), wobei der thermoplastische Hauptbestandteil des (Meth)acrylat(co)polymers oder der Mischung von (Meth)acrylat(co)polymeren A) (= Polymer A)) zu mindestens 30 Gew.-%, vorzugsweise mindestens 50 Gew.-%, aus Methylmethacrylat-Wiederholungseinheiten besteht. Weiter bevorzugt ist, dass der thermoplastische Hauptbestandteil des (Meth)acrylat(co)polymers oder der Mischung von (Meth)acrylat(co)polymeren A) (= Polymer A)) zu mindestens 80 Gew.-%, vorzugsweise mindestens 90 Gew.-% und besonders bevorzugt zu mindestens 95 Gew.-% aus Methylmethacrylat-Wiederholungseinheiten besteht.

Eine bevorzugte Polymerblend-Schicht a) wird ggf. im Rahmen der Erfindung auch als "modifiziertes PMMA gemäß der Erfindung" bezeichnet.

In einem bevorzugten erfindungsgemäßen Verbundsystem hat eine Zusammensetzung, aus der die Polymerblend-Schicht a) zusammengesetzt ist, eine Vicaterweichungstemperatur VET (ISO 306-B50) von mindestens 110°C, vorzugsweise von mindestens 112°C, bevorzugt von mindestens 115°C.

Eine weitere erfindungsgemäße Ausführungsform des Verbundsystemes ist dadurch gekennzeichnet, dass die Polymerblend-Schicht a) eine Dicke im Bereich von 10 bis 2000 µm, vorzugsweise von 20 bis 1500 µm, bevorzugt von 30 bis 1000 µm, weiter bevorzugt von 40 bis 500 µm, ganz besonders bevorzugt von 50 bis 300 µm, aufweist.

Eine weitere erfindungsgemäße Ausführungsform ist ein Verbundsystem, vorzugsweise gemäß einer der obigen bevorzugten Ausführungsformen, bei dem die Polymerblend-Schicht a) übliche Zusatzstoffe bzw. Additive enthält. Hierzu gehören unter anderem UV-Stabilisatoren, UV-Absorber, Gleitmittel, Antistatika, Flammenschutzmittel, Additive zur Erhöhung der Kratzfestigkeit, Antioxidantien, Lichtstabilisatoren, organische Phosphorverbindungen, Verwitterungsschutzmittel und/oder Weichmacher.

Weiter bevorzugt ist, dass diese in der Polymerblend-Schicht a) des erfindungsgemäßen Verbundsystemes enthaltenen Zusatzstoffe bzw. Additive jeweils mit einem Anteil von 0,001 bis 5 Gew.-%, vorzugsweise jeweils mit einem Anteil von 0,001 bis 1 Gew.-%, weiter bevorzugt jeweils mit einem Anteil von 0,002 bis 0,5 Gew.-%, besonders bevorzugt jeweils mit einem Anteil von 0,005 bis 0,2 Gew.-%, bezogen jeweils auf das Gesamtgewicht der Polymerblend-Schicht a), vorliegen. Die Menge an Zusatzstoffen bzw. Additiven ist je nach Anwendungszweck festzulegen. Vorzugsweise umfasst eine Polymerblend-Schicht a) eines erfindungsgemäßen Verbundsystems insgesamt höchstens 5 Gew.-%, vorzugsweise insgesamt höchstens 2 Gew.-% Additive, bezogen auf das Gesamtgewicht der Polymerblend-Schicht a).

Bei den UV-Stabilisatoren handelt es sich bevorzugt um sterisch gehinderte Amine (Hindered Amine Light Stabilizer; HALS) und um Methylsalicylate.

Bei den UV-Absorbern handelt es sich bevorzugt um sterisch gehinderte Phenole, insbesondere um Benztriazole, wie z.B. Hydroxyphenylbenztriazole, und/oder um Triazine. Es können aber auch substituierte Benzophenone, Salicylsäureester, Zimtsäureester, Oxalanilide, Benzoxazinone oder Benzyliden-Malonat eingesetzt werden.

Bevorzugte Gleitmittel sind Fettsäuren, Fettsäureester bzw. Fettalkohole wie z.B. Stearinsäure, Palmitinsäure, Stearylalkohol, Cetylalkohol und deren technische Gemische.

Bevorzugtes Antistatikum sind z.B. Laurylamin Ethoxylat und Glycerinmonostearat.

Additive zur Erhöhung der Kratzfestigkeit sind z.B. Polyorganosiloxane.

In einem erfindungsgemäß besonders bevorzugten Verbundsystem liegt ein Gewichtsverhältnis von dem (Meth)acrylat(co)polymer oder der Mischung von (Meth)acrylat(co)polymeren A) (= Polymer A)) zu dem Styrol-Maleinsäureanhydrid-(Co)Polymer B) (= Polymer B) im Bereich von 10:90 bis 90:10, vorzugsweise im Bereich von 15:85 bis 85:15, bevorzugt im Bereich von 20:80 bis 80:20, ganz bevorzugt von 70:30 bis 30:70, vor.

Die Polymerblend-Schicht a) eines erfindungsgemäßen Verbundsystems kann optional schlagzähmodifiziert sein. Geeignete Schlagzähmodifier, die im Rahmen der vorliegenden Erfindung eingesetzt werden können, sind z. B. Kautschukpartikel, die vernetztes Butadien und / oder Styrol und / oder vernetzte längerkettige Alkyl(meth)acrylate enthalten. Jedoch kann es im Rahmen der Erfindung ebenso bevorzugt sein, dass sowohl die Polymerblend-Schicht a) als auch alle weiteren Bestandteile des erfindungsgemäßen Verbundsystems kein Schlagzähmodifizierungsmittel enthält. Schlagzähmodifizierungsmittel könnten gegebenenfalls die optischen Eigenschaften in einer der bevorzugten Verwendungen des erfindungsgemäßen Verbundsystems, z.B. als Kunststoffverglasung für Displays, stören.

### Glas- oder Kunststoff-Schicht c)

Als vorteilhaft hat es sich im Rahmen der Erfindung gezeigt, einen thermoplastischen Kunststoff als Schicht c) einzusetzen.

In einer besonders bevorzugten Ausführungsform ist das erfindungsgemäße Verbundsystem dadurch gekennzeichnet, dass die Schicht c) eine Polycarbonat-Schicht ist.

Erfindungsgemäß bevorzugt wird als Polycarbonatkomponente Makrolon^{®} 2607 von Bayer Materials (mit einem MVR von 12 ml/10min (300°C/1,2 kg, nach ISO 1133) und einer Vicat-Temperatur B50 von 143 °C nach ISO 306) verwendet. Es sind aber auch andere Polycarbonattypen von Bayer Materials als Polycarbonat-Schicht denkbar. Ebenso sind auch Polycarbonate vom Typ CALIBRE^{®} der Fa. Styron, LEXAN^{®} von Fa. Sabic, TARFLON^{®} von Fa. Idemitsu, Panlite^{®} von Fa. Tejin Kasei und weitere Polycarbonate anderer Polycarbonat-Hersteller für die Verwendung als Polycarbonat-Schicht möglich.

Die besonders bevorzugte Ausführungsform des erfindungsgemäßen Verbundsystems bei dem die Schicht c) eine Polycarbonat-Schicht ist, hat besonders gute Ergebnisse hinsichtlich den Eigenschaften der Reduktion der Verwerfung und der Bereitstellung eines schlagzähen Verbundes, kombiniert mit einer hohen Wärmeformbeständigkeit ergeben. Dabei ist besonders zu erwähnen, dass die Polycarbonat-Schicht im Allgemeinen eher weich ist und erst durch den Verbund die gute Schlagzähigkeit in Kombination mit guter Oberflächenhärte erzielt wird. Die Kombination dieser Eigenschaften ist jedoch für viele der gewünschten Anwendungen, z.B. in Display-Anwendungen, wichtig.

Insbesondere bevorzugt ist eine Ausführungsform des erfindungsgemäßen Verbundsystems, bei dem die äußere Polycarbonat-Schicht c) und/oder die äußere Polymerblend-Schicht a) mit einer funktionalen Beschichtung versehen ist.

Erfindungsgemäß ist zudem bevorzugt, dass das Verbundsystem, vorzugsweise gemäß einer der vorherig beschriebenen Ausführungsformen dadurch gekennzeichnet ist, dass die Schicht c), die weiter vorzugsweise eine Polycarbonat-Schicht ist, eine Dicke im Bereich von 20 bis 3000 µm, vorzugsweise von 50 bis 2000 µm, bevorzugt von 200 bis 1500 µm, weiter bevorzugt von 300 bis 1200 µm, aufweist.

### Verbund

Weiter bevorzugt im Sinne der Erfindung ist, dass bei einem erfindungsgemäßen Verbundsystem, insbesondere einem Verbundsystem, bei dem die Schicht c) eine Polycarbonat-Schicht ist, die Polymerblend-Schicht a) auf die Schicht c) aufgebracht worden ist, vorzugsweise durch Laminierung.

Eine Laminierung kann im Sinne der vorliegenden Erfindung über eine Coextrusion, d.h. über ein Zusammenfügen zweier Schichten a) und c), in der vorliegenden Erfindung vorzugsweise einer PMMA enthaltenden Schicht und einer Polycarbonat-Schicht, erfolgen. Die Laminierung ist jedoch nicht auf die Coextrusion beschränkt. Auch andere bekannte Verfahren sind im Sinne der Erfindung geeignet, die zwei Schichten a) und c), vorzugsweise eine PMMA enthaltende Schicht mit einer Polycarbonat-Schicht, zu verbinden.

Es ist erfindungsgemäß bevorzugt, dass das Verbundsystem, vorzugsweise gemäß einer der obigen bevorzugten Ausführungsformen, ein Laminat ist, d.h. in Form eines Laminats vorliegt.

Weiter ist es insbesondere bevorzugt, dass das erfindungsgemäße Verbundsystem eine Mehrschichtfolie ist, d.h. in Form einer Mehrschichtfolie vorliegt.

Das erfindungsgemäße Verbundsystem kann vorzugsweise dadurch gekennzeichnet sein, dass a) und/oder c) ein- oder beidseitig funktionale Beschichtungen, vorzugsweise Kratzfestbeschichtungen, Antireflex-Beschichtungen und/oder antistatische Beschichtungen aufweisen. Gemäß der erfindungsgemäßen Lehre können die Beschichtungen sowohl jeweils gleich als auch jeweils voneinander verschieden sein (z.B. Ausführungsformen, wobei die ein- oder beidseitigen Beschichtungen von a) und c) alle Kratzfestbeschichtungen sind oder Ausführungsformen, wobei a) und c) jeweils nur eine Beschichtung aufweist und diese Beschichtungen unterschiedlich voneinander sind, z.B. eine Kratzfest- und eine antistatische Beschichtung). Erfindungsgemäß sind alle Kombinationsmöglichkeiten umfasst, die sich daraus ergeben, dass a) und/oder c) ein- oder beidseitig funktionale Beschichtungen gemäß obiger Aufzählung aufweisen können.

Erfindungsgemäß besonders bevorzugt sind dabei die Ausführungsformen, bei denen das Verbundsystem zumindest eine Kratzfestbeschichtung bei a) oder c), weiter bevorzugt zumindest eine Kratzfestbeschichtung bei a) und c) aufweist. Insbesondere bevorzugt ist es im Sinne der vorliegenden Erfindung, wenn a) und c) jeweils eine Kratzfestbeschichtung auf ihrer jeweils äußeren Schichtseite, d.h. der Schichtseite, die nicht in das Innere des Verbundes führt, besitzen.

Erfindungsgemäß bevorzugt werden Kratzfestbeschichtungen eingesetzt, bei denen es sich um thermisch oder UV-vernetzte Lacke auf Basis von (Meth)Acrylaten oder Silikonen handelt. Diese Lacke können weiterhin die Kratzfestigkeit verbessernde Nanopartikel, z.B. auf Basis von Siliziumoxiden, enthalten. Oftmals enthalten Sie auch Silikatkügelchen, um eine Antiglarewirkung zu erzielen. Bei der Auswahl der zusätzlichen Partikel ist jedoch sehr darauf zu achten, dass diese derart klein sind, dass es zu keiner Lichtbrechung kommt, bzw. dass diese Partikel den gleichen Brechungsindex aufweisen wie der verwendete Lack. Die Lacke werden vorzugsweise im Dipcoating, Spraycoating, Spincoating, etc. aufgebracht.

Optional sind die Polymerblend-Schicht a) und die Glas- oder Kunststoff-Schicht c), die ggf. jeweils unabhängig voneinander ein oder zweiseitig funktional beschichtet sind, über eine oder mehrere Klebschichten, Glasschichten und/oder optische Folien, vorzugsweise eine oder mehrere Kleb-Schichten, bevorzugt mindestens eine Kleb-Schicht eines optical clear adhesive (OCA) oder eines pressure sensitive adhesive (PSA), miteinander verbunden,

Ein erfindungsgemäß bevorzugtes Verbundsystem weist einen Haze-Wert von < 10 %, vorzugsweise < 5 % auf (nach ISO 13803).

Wie weiter oben schon ausgeführt, handelt es sich bei einem erfindungsgemäßen Verbundsystem vorzugsweise um eine Mehrschichtfolie. Weiter ist es besonders bevorzugt, dass diese Mehrschichtfolie in Form einer Abdeckung, vorzugsweise einer Displayabdeckung, oder eines Touch Screens, oder einer Verscheibung, vorzugsweise einer Automobilverscheibung, oder in Form eines Teiles eines Displays, einer Abdeckung, vorzugsweise einer Displayabdeckung bzw. Frontscheibe eines Displays, oder eines Touch Screens oder einer Verscheibung, vorzugsweise einer Automobilverscheibung, vorliegt. Unter "Display" wird im Sinne der vorliegenden Erfindung eine Vorrichtung zur Anzeige von zeitlich veränderlichen Informationen verstanden.

Somit ist ein weiterer Gegenstand der vorliegenden Erfindung, neben den erfindungsgemäßen Verbundsystemen, ein Display, das ein gemäß obiger Darstellung erfindungsgemäßes Verbundsystem, insbesondere gemäß einer der bevorzugten Ausführungsformen, enthält.

Im Rahmen der vorliegenden Erfindung ist es weiter bevorzugt, dass es sich bei diesem Display, das ein erfindungsgemäßes Verbundsystem, enthält, um ein LCD-, OLED- oder elektrophoretisches Display handelt.

In einem erfindungsgemäßen Display ist die Polymerblend-Schicht a) vorzugsweise mittels eines optical clear adhesive (OCA) oder eines pressure sensitive adhesive (PSA) mit der darunter liegenden Schicht c) verbunden. Die Auswahl geeigneter OCA oder PSA sind dem Fachmann dabei allgemein geläufig. Diese Klebschicht verbessert die mechanische Stabilität des Gesamtdisplays und reduziert die Lichtreflexion an den Grenzflächen der Schichten.

Ebenso von der der vorliegenden Erfindung erfasst ist die Verwendung eines Styrol-Maleinsäureanhydrid-(Co)Polymers,
- wobei der Anteil an Maleinsäureanhydrid-Wiederholungseinheiten in dem Styrol-Maleinsäureanhydrid-(Co)Polymer 10 bis 30 Gew.-%, vorzugsweise 15 bis 28 Gew.-%, bevorzugt 20 bis 26 Gew.-%, jeweils bezogen auf das Gesamtgewicht des Styrol-Maleinsäureanhydrid-(Co)Polymers, beträgt,
   und
- wobei das Styrol-Maleinsäureanhydrid-(Co)Polymer hergestellt ist aus einer Monomermischung umfassend Styrol, Maleinsäureanhydrid und 0 bis 50 Gew.-% mit Styrol und / oder Maleinsäureanhydrid copolymerisierbaren Vinylmonomere, bezogen auf das Gesamtgewicht an Maleinsäureanhydrid im Styrol-Maleinsäureanhydrid-(Co)Polymer,
zur Reduktion der Verwerfung eines Displays, einer Displayabdeckung, eines Touch Screens oder einer Verscheibung, vorzugsweise einer Automobilverscheibung.

Bei der erfindungsgemäßen Verwendung zur Reduktion der Verwerfung eines Displays, einer Displayabdeckung, eines Touch Screens oder einer Verscheibung, vorzugsweise einer Automobilverscheibung, enthält das Display, die Displayabdeckung, der Touch Screen oder die Verscheibung, vorzugsweise die Automobilverscheibung, eine Kunststoff- oder GlasSchicht, vorzugsweise eine thermoplastische Kunststoff-Schicht, bevorzugt eine Polycarbonat-Schicht.

Eine weitere von der Erfindung erfasste Ausführungsform betrifft die Verwendung eines erfindungsgemäßen Verbundsystems gemäß obiger Beschreibung als optisches Anzeigenelement oder in einem optischen Anzeigenelement.

### Meßmethoden:

### Mittleres Molekulargewicht M_{w} (Gewichtsmittel) und mittleres Molekulargewicht Mₙ (Zahlenmittel):

Das mittlere Molekulargewicht M_{w} (Gewichtsmittel) und mittleres Molekulargewicht Mₙ (Zahlenmittel) im Rahmen der vorliegenden Erfindung wird über die Größenausschlusschromatographie (GPC) gemäß folgender Bedingungen bestimmt:

| | | |
|---|---|---|
| Säulen: | 5 SDV-Säulen von Fa. PSS (Mainz) | |

| **Nr.** | **Typ** | **Dimension** |
|---|---|---|
| Vorsäule | SDV LinL | 10 µ 8x50mm |
| 1 | SDV LinL | 10 µ 8x300mm |
| 2 | SDV LinL | 10 µ 8x300mm |
| 3 | SDV 100 Å | 10 µ 8x300mm |
| 4 | SDV 100 Å | 10 µ 8x300mm |
| | | |
| Geräte | Agilent 1100er Serie, UV-Detektor G1314A | |
| | Agilent 1100er Serie, RI-Detektor G1362A | |
| | | |
| Säulenofen | T = 35 °C | |
| Eluent | Tetrahydrofuran für Polymer A) und Vergleichsbeispiel II | |
| | Tetrahydrofuran + 0,2 Vol-% Trifluoressigsäure für Polymer B) und Vergleichsbeispiel I | |
| Flußrate | 1 ml/min | |
| Injektionsvolumen | 100 µl | |
| | | |
| Detektion | RI | Temperierung 35 °C, |
| | | |
| Konzentration der Probelösung | 2 g/l (bei Mw > 10⁶: 1 ... 0,25 g/l) | |
| Standards | PMMA (z.B. Fa. PSS (Mainz) für Polymer A) und Vergleichsbeispiel I + II | |
| | Polystyrol (z.B. Fa. PSS (Mainz) für Polymer B) | |
| Konzentration der Standardlösung | 1g/l (bei Mw > 10⁶: 0,5 g/l) | |
| Interner Standard | o-Dichlorbenzol --> 1 Tropfen/1,5 ml Autosampler-Vial | |

### Verwerfung: 85°C, 85% r.F., 72 h (Messung der max. Wölbung mit Messschieber Probe 100 x 100 mm)

Die Verwerfung wurde im Rahmen der vorliegenden Erfindung an einer Probe mit den Abmessungen 100 x 100 mm gemessen, die aus einer coextrudierten Platte geschnitten wurde. Die nach Herstellung annähernd planar-ebenen Proben wurden in einem Klimaschrank auf einem Rost liegend bei 85 °C und 85 % relativer Feuchte für 72 h gelagert, wobei die Polymerblend-Schicht a) bzw. gemäß den durchgeführten Vergleichsversuchen die der Polymerblend-Schicht a) entsprechende Schicht nach oben gelagert war. Nach Herausnehmen aus dem Klimaschrank und dem vollständigen Abkühlen der Proben für 24h bei 23°C wurde die Wölbung (Abstand des höchsten Punktes von der ebenen Unterlage in mm) am höchsten Punkt mit einem Messschieber bestimmt. Um aussagekräftige Werte zu erhalten, wurden mindestens Doppelbestimmungen durchgeführt.
MVR: ISO 133 Teil1; 230 °C/3,8 kg
Wärmeformbeständigkeit: Vicat-Temperatur; ISO 306-B50
Transmission: ISO 13468
Haze: ISO 13803

### IR-Methode zur Bestimmung des Anteils an Maleinsäureanhydrid-Wiederholungseinheiten im Styrol-Maleinsäureanhydrid-(Co)Polymer:

IR-Messung einer Chloroformlösung von 15 mg Styrol-Maleinsäureanhydrid-(Co)Polymer in 1 ml Chloroform.

Die nachfolgenden Beispiele dienen der näheren Erläuterung und dem besseren Verständnis der vorliegenden Erfindung schränken diese bzw. deren Umfang jedoch in keiner Weise ein.

### Beispiele

### Herstellung von einem Polymerblend a) (für eine Polymerblend-Schicht a)) bzw. Vergleichszusammensetzungen

### Beispiel (erfindungsgemäß)

Ein modifiziertes PMMA gemäß der Erfindung (= ein Polymerblend für die Polymerblend-Schicht a)) wird hergestellt aus:
50,00 Gew.-% eines Standard-PMMA (entspricht Polymer A))
50,00 Gew.-% Styrol-Maleinsäureanhydrid-(Co)-Polymer (entspricht Polymer B)

Das Standard-PMMA (= Polymer A) ist aufgebaut aus 96% Methylmethacrylat und 4% Methylacrylat. Dieses PMMA wird in Anlehnung an DE 44 40 219 A1 hergestellt:

| | |
|---|---|
| 95,305 Gew.-% | Methylmethacrylat |
| 4,000 Gew.-% | Methylacrylat |
| 0,310 Gew.-% | n-Dodecylmercaptan |
| 0,035 Gew.-% | Dilauroylperoxid |
| 0,030 Gew.-% | ter.-Butylperisononanoat |
| 0,300 Gew.-% | Stearylalkohol |
| 0,020 Gew.-% | 2-(2'-Hydroxy-5'-methylphenyl) benzotriazol |

Die Edukte werden in Polyesterbeutel eingewogen, in einem Wasserbad polymerisiert und dann in einem Temperierofen getempert. Anschließend wird das Polymer gemahlen und über einen Extruder entgast.

Temperaturprofil für die Polymerisation im Wasserbad:
24h 60°C

Temperaturprofil im Temperierofen:
6h bei 110°C

Das erhaltene Molekulargewicht des PMMA beträgt M_{w}=149 000 g/mol gemessen mit der GPC-Methode.

Das PMMA hat eine Vicaterweichungstemperatur VET (ISO 306-B50) von 105°C. Das Styrol-Maleinsäureanhydrid-(Co)-Polymer (= Polymer B) wird durch kontinuierliche Polymerisation von Styrol und Maleinsäureanhydrid mit Dibenzoylperoxid in Methylethylketon bei 120°C in einem 100l kontinuierlich betriebenen Rührkesselreaktor mit sehr guter Rückvermischung durch einen Ankerrührer hergestellt. Diese Art von rückvermischtem Rührkessel ist aus dem Stand der Technik bekannt (z.B.: Chemische Reaktionstechnik, Georg Thieme Verlag 1987, S.237-241.)

Der Polymersirup im Auslauf des Rührkesselreaktors mit einem Teilumsatz an Styrol und Maleinsäureanhydrid wird kontinuierlich über einen Doppelschneckenextruder mit Entgasungsöffnungen entgast und anschließend in einem Granulator granuliert und das Produkt anschließend durch IR-Spektroskopie auf die Polymerzusammensetzung untersucht. Bei der Herstellung des Styrol-Maleinsäureanhydrid-(Co)Polymer wird darauf geachtet, dass der Polymeranteil im Polymersirup des Reaktorauslaufes bei etwa 28% liegt, was etwa 40% Gesamtmassenumsatz des eingesetzten Styrol und Maleinsäureanhydrid bedeutet.
Konkret wird ein Gemisch aus 9,2 kg/h Methylethylketon, 2,3 kg/h Maleinsäureanhydrid und 18,8 kg/h Styrols bei 23°C dem Reaktor kontinuierlich zugeführt. Weiterhin werden dem Reaktor Dibenzoylperoxid als Polymerisationsinitiator kontinuierlich zugeführt. Der notwendige Mengenstrom des Dibenzoylperoxides ergibt sich aus der gemessenen Reaktortemperatur, die die Hublänge der Dosierpumpe des Dibenzoylperoxidzulauf über ein Regelunsgsystem so verändert, dass eine konstante Reaktortemperatur von 110°C eingehalten werden kann. Um einen Anteil von 23 Gew.-% Maleinsäureanhydrid-Wiederholungseinheiten im Styrol-Maleinsäureanhydrid-(Co)-Polymer zu erhalten, werden regelmäßig Granulatproben gezogen und mittels IR-Spektroskopie die Zusammensetzung bestimmt. Auf Basis der IR-Analyse wird der Anteil an Maleinsäuranhydrid im Zulaufgemisch geringfügig geändert, um einen Anteil von 23 Gew.-% Maleinsäureanhydrid-Wiederholungseinheiten im Styrol-Maleinsäureanhydrid-(Co)-Polymer zu erhalten.

Die IR-Spektospkopie-Analyse des Styrol-Maleinsäureanhydrid-(Co)-Polymers, das zur Herstellung der Polymerblend-Schicht a) verwendet wird, ergibt einen Anteil von 23 Gew.-% Maleinsäureanhydrid-Wiederholungseinheiten und einen Anteil von 77 Gew.-% Styrol-Wiederholungseinheiten im Styrol-Maleinsäureanhydrid-(Co)-Polymer und ein Molekulargewicht des Styrol-Maleinsäureanhydrid-(Co)-Polymers von M_{w} = 86 500 g/mol und Mₙ=48 000 g/mol gemessen über GPC. Die Vicaterweichungstemperatur VET (ISO 306-B50) des Styrol-Maleinsäureanhydrid-(Co)Polymers beträgt 146°C.

Die Bestandteile (Polymer A und Polymer B) werden in einem Doppelschneckenextruder zur Herstellung des Polymerblends a) miteinander vermischt.

Der gemessene Anteil an Maleinsäureanhydrid-Wiederholungseinheiten in dem Polymerblend a) beträgt 11,5 Gew.-%, bezogen auf das Gesamtgewicht des Polymerblends a).

Das Polymerblend a) hat eine Vicaterweichungstemperatur VET (ISO 306-B50) von 123°C.

### Vergleichsbeispiel 1

Als modifiziertes PMMA mit höherer Wärmeformbeständigkeit gegenüber Standard-PMMA wird ein Copolymer aus Methylmethacrylat, Styrol und Maleinsäureanhydrid gewählt. Dieses Copolymer wird in Anlehnung an DE 44 40 219 A1 hergestellt:

| | |
|---|---|
| 72,438 Gew.-% | Methylmethacrylat |
| 16,000 Gew.-% | Styrol |
| 11,000 Gew.-% | Maleinsäureanhydrid |
| 0,360 Gew.-% | n-Dodecylmercaptan |
| 0,032 Gew.-% | ter.-Butylperneodecanoat |
| 0,010 Gew.-% | ter.-Butylperisononanoat |
| 0,150 Gew.-% | Stearylalkohol |
| 0,010 Gew.-% | 2-(2'-Hydroxy-5'-methylphenyl) benzotriazol |

Die Edukte werden in Polyesterbeutel eingewogen, in einem Wasserbad polymerisiert und dann in einem Temperierofen getempert. Anschließend wird das Polymer gemahlen und über einen Extruder entgast.

Temperaturprofil für die Polymerisation im Wasserbad:
12h 52°C
16h 44°C

Temperaturprofil im Temperierofen:
6h bei 110°C

Das erhaltene Molekulargewicht des modifizierten PMMA beträgt M_{w}=145 000 g/mol gemessen mit der GPC-Methode.

Das modifizierte PMMA hat eine Vicaterweichungstemperatur VET (ISO 306-B50) von 122°C.

### Vergleichsbeispiel 2

Als weiterer Vergleich wird ein Standard-PMMA, aufgebaut aus 99% Methylmethacrylat und 1% Methylacrylat, gewählt, Dieses PMMA zeichnet sich durch eine hohe Wärmeformbeständigkeit aus. Das Copolymer wird in Anlehnung an DE 44 40 219 A1 hergestellt:

| | |
|---|---|
| 98,485 Gew.-% | Methylmethacrylat |
| 1,000 Gew.-% | Methylacrylat |
| 0,290 Gew.-% | n-Dodecylmercaptan |
| 0,035 Gew.-% | Dilauroylperoxid |
| 0,030 Gew.-% | ter.-Butylperisononanoat |
| 0,150 Gew.-% | Stearylalkohol |
| 0,010 Gew.-% | 2-(2'-Hydroxy-5'-methylphenyl) benzotriazol |

Die Edukte werden in Polyesterbeutel eingewogen, in einem Wasserbad polymerisiert und dann in einem Temperierofen getempert. Anschließend wird das Polymer gemahlen und über einen Extruder entgast.

Temperaturprofil für die Polymerisation im Wasserbad:
24h 60°C

Temperaturprofil im Temperierofen:
6h bei 110°C

Das erhaltene Molekulargewicht des Standard- PMMA beträgt M_{w}=152 000 g/mol gemessen mit der GPC-Methode.

Das Standard-PMMA hat eine Vicaterweichungstemperatur VET (ISO 306-B50) von 109°C.

### Herstellung eines Verbundes

Das Polymerblend a) (erfindungsgemäßes Beispiel), bzw. das modifizierte PMMA (Vergleichsbeispiel 1), bzw. das Standard-PMMA mit hoher Wärmeformbeständigkeit (Vergleichsbeispiel 2), wird über eine Düse eines Coextruders auf Makrolon^{®} 2607 (Polycarbonat-Schicht, entsprechend Schicht c)) einseitig laminiert. Der Laminationsschritt erfolgt durch Coextrusion über eine Adapterdüse. Die Polycarbonat-Schicht ist 900 µm dick, während die Polymerblend-Schicht a) (erfindungsgemäßes Beispiel), bzw. das modifizierte PMMA (Vergleichsbeispiel 1), bzw. das Standard-PMMA mit hoher Wärmeformbeständigkeit (Vergleichsbeispiel 2) 120 µm dick ist.

Parameter der Coextrusionsversuche (die Bedingungen wurden bis auf die genannten Änderungen bei allen Beispielen gleich gehalten):
Extruderhersteller:
   Hauptextruder Doppelschneckenextruder: Breyer (Singen)
   Coextruder Einschneckenextruder: Stork (Mörfelden-Walldorf)
Schneckendurchmesser:
   Hauptextruder: 60 mm
   Coextruder: 35 mm
Schneckendrehzahl:
   Hauptextruder: 47 Upm
Coextruder:
   Erfindungsgemäßes Beispiel: 82 Upm
   Vergleichsbeispiel 1: 70 Upm
   Vergleichsbeispiel 2: 55 Upm
Polymerdurchsatz:
   Hauptextruder: 60kg/h
   Coextruder: 7,2kg/h
Abzugsgeschwindigkeit der Platte: 1,9m/min

Vakuum bei der Entgasung bei beiden Extrudern 200 mbar +/- 20 mbar Temperaturen (sind für alle Beispiele gleich gehalten worden):

**Zylindertemperaturen:**

| | **Hauptextruder (Polycarbonat)** | **Coextruder (PMMA)** |
|---|---|---|
| Heizzone 1 | 225 | 200 |
| Heizzone 2 | 280 | 250 |
| Heizzone 3 | 260 | 265 |
| Heizzone 4 | 259 | 265 |
| Heizzone 5 | 260 | 275 |
| Heizzone 6 | 260 | 275 |
| Heizzone 7 | 262 | 275 |
| Heizzone 8 | 260 | 275 |
| Heizzone 9 | 265 | --- |

**Düsentemperaturen:**

| | | | | | |
|---|---|---|---|---|---|
| | 290 | 290 | 290 | | PC-Seite |
| 270 | | | | 270 | |
| | 270 | 276 | 271 | | PMMA-Seite |

### Ergebnisse:

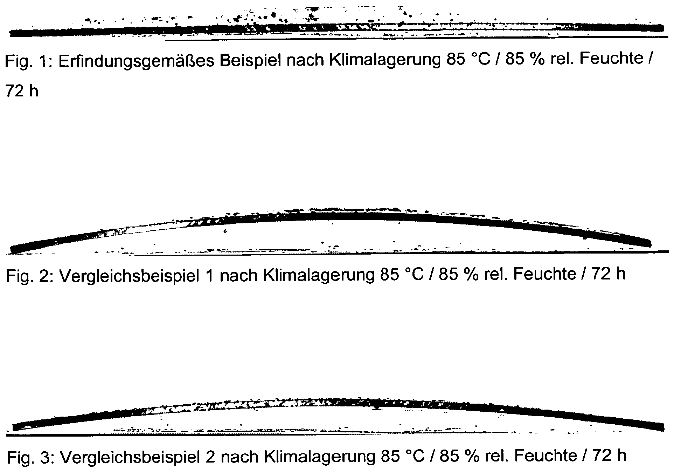

Die Ergebnisse des erfindungsgemäßen Beispiels und der Vergleichsbeispiele sind in den nachfolgenden Tabellen zusammengestellt. Es ist eine eindeutig geringere Verwerfung bei dem erfindungsgemäßen Verbund von nur 1,1 mm im Gegensatz zu 3,8 bzw. 3,7 mm bei den Vergleichsbeispielen zu erkennen (Fig. 1-3). Insbesondere zeigt auch Vergleichsbeispiel 1, dass das erhaltene Methylmethacrylat-Styrol-Maleinsäureanhydrid-Copolymer zwar eine höhere Wärmeformbeständigkeit besitzt als ein Standard-PMMA mit an sich schon hoher Wärmeformbeständigkeit, dass jedoch die Aufgabe einer geringen Verwerfung des Laminates durch den Einsatz dieses Copolymeren nicht gelöst werden kann.

Die Ergebnisse zeigen weiter, dass die Werte für Transmission und Haze des erfindungsgemäßen Verbundsystems bzw. der erfindungsgemäßen Mehrschichtfolie gegenüber den diesbezüglichen Werten der Vergleichsbeispiele 1 und 2 im Rahmen der Messgenauigkeit nicht negativ beeinflusst werden.

**Tabelle 1: Eigenschaftsprofil für Polymerblend a) und den entsprechenden Vergleichsbeispiel-Zusammensetzungen**

| | **Beispiel** | **Vergleichsbeispiel 1** | **Vergleichsbeispiel 2** | **Methode** | **Bemerkung** |
|---|---|---|---|---|---|
| **MVR** | 2,99 ml/10min | 1,20 ml/10min | 0,80 ml/10min | ISO 1133 Teil1 230°C/3,8kg | |
| **Vicat Temperatur (B/50)** | 123 °C | 122 °C | 109 °C | ISO 306 | |
| **Transmission** | 90,5% | 91,5% | 92,3% | ISO 13468 | 2 mm Spritzling |

**Tabelle 2: Eigenschaften der Verbundsysteme / Mehrschichtfolien.**

| | **Beispiel** | **Vergleichsbeispiel 1** | **Vergleichsbeispiel 2** | **Parameter** | **Bemerkung** |
|---|---|---|---|---|---|
| **Verwerfung** | 1,1 mm | 3,8 mm | 3,7 mm | 85°C, 85% r.F., 72 h | Messung der max. Wölbung mit Messschieber Probe 100 x 100 mm |
| **Transmission** | 90,20% | 90,20% | 90,40% | ISO 13468 | Gemessen über Foliendicke |
| **Haze** | 0,16% | 0,30% | 0,19% | ISO 13803 | Gemessen über Foliendicke |

## Patentansprüche

1. Verbundsystem umfassend:
- a) eine Polymerblend-Schicht umfassend oder bestehend aus
A) einem (Meth)acrylat(co)polymer oder einer Mischung von (Meth)acrylat(co)polymeren und
B) einem Styrol-Maleinsäureanhydrid-(Co)Polymer,
wobei der Anteil an Maleinsäureanhydrid-Wiederholungseinheiten in dem Styrol-Maleinsäureanhydrid-(Co)Polymer B) 10 bis 30 Gew.-%, bezogen auf das Gesamtgewicht des Styrol-Maleinsäureanhydrid-(Co)Polymers B), beträgt, und wobei der Anteil an Maleinsäureanhydrid-Wiederholungseinheiten in der Polymerblend-Schicht a) 1 bis 27 Gew.-%, bezogen auf das Gesamtgewicht der Polymerblend-Schicht a), beträgt und
wobei das Styrol-Maleinsäureanhydrid-(Co)Polymer B) hergestellt ist aus einer Monomermischung umfassend Styrol, Maleinsäureanhydrid und 0 bis 50 Gew.-% mit Styrol und / oder Maleinsäureanhydrid copolymerisierbaren Vinylmonomere, bezogen auf das Gesamtgewicht an Maleinsäureanhydrid im Styrol-Maleinsäureanhydrid-(Co)Polymer B),
- b) optional eine oder mehrere Klebschichten, Glasschichten und/oder optische Folien, vorzugsweise eine oder mehrere Kleb-Schichten, und
- c) eine Glas- oder Kunststoff-Schicht, vorzugsweise eine Kunststoff-Schicht,
wobei a) und c) miteinander verbunden sind oder die eine oder mehrere Schichten b) die beiden Schichten a) und c) miteinander verbinden.

2. Verbundsystem gemäß Anspruch 1 wobei A) zu mindestens 30 Gew.-%, bezogen auf das Gesamtgewicht von A), aus Methylmethacrylat-Wiederholungseinheiten aufgebaut ist.

3. Verbundsystem gemäß Anspruch 1 oder 2, **dadurch gekennzeichnet, dass** die zu polymerisierende Zusammensetzung zur Herstellung von A) ein oder mehrere der folgenden mit Methylmethacrylat und/oder (Meth)acrylaten copolymerisierbaren Monomere umfasst: Alkyl(meth)acrylate, Methylacrylat, Ethylacrylat, Butylacrylat, Cyclohexyl(meth)acrylat, Norbornyl(meth)acrylat, (Meth)acrylsäure, Glutarsäureanhydrid, Styrol, Maleinsäureanhydrid, n-Isopropyl(meth)acrylamid, (Meth)acrylamid, Vinylcyclohexan, Acrylnitril, Vinylacetat und substituierte Styrole.

4. Verbundsystem gemäß zumindest einem der vorherigen Ansprüche, **dadurch gekennzeichnet, dass** das Styrol-Maleinsäureanhydrid-(Co)Polymer B) einen Anteil an Styrol-Wiederholungseinheiten von 55 bis 90 Gew.-%, bezogen auf das Gesamtgewicht des Styrol-Maleinsäureanhydrid-(Co)Polymers B), besitzt.

5. Verbundsystem gemäß zumindest einem der vorherigen Ansprüche, **dadurch gekennzeichnet, dass** A) ein mittleres Molekulargewicht von mindestens M_{w} = 50 000 g/mol und/oder B) ein mittleres Molekulargewicht von mindestens M_{w} = 40 000 g/mol besitzt.

6. Verbundsystem gemäß zumindest einem der vorherigen Ansprüche, **dadurch gekennzeichnet, dass** eine Zusammensetzung, aus der die Polymerblend-Schicht a) zusammengesetzt ist, eine Vicaterweichungstemperatur VET (ISO 306-B50) von mindestens 110°C hat.

7. Verbundsystem gemäß zumindest einem der vorherigen Ansprüche, **dadurch gekennzeichnet, dass** die Polymerblend-Schicht a) UV-Stabilisatoren, UV-Absorber, Gleitmittel, Antistatika, Flammenschutzmittel, Additive zur Erhöhung der Kratzfestigkeit, Antioxidantien, Lichtstabilisatoren, organische Phosphorverbindungen, Verwitterungsschutzmittel und/oder Weichmacher jeweils mit einem Anteil von 0,001 bis 5 Gew.-%, bezogen jeweils auf das Gesamtgewicht der Polymerblend-Schicht a), enthält.

8. Verbundsystem gemäß zumindest einem der vorherigen Ansprüche, **dadurch gekennzeichnet, dass** das Gewichtsverhältnis von A) zu B) im Bereich von 10:90 bis 90:10 liegt.

9. Verbundsystem gemäß zumindest einem der vorherigen Ansprüche, **dadurch gekennzeichnet, dass** die Glas- oder Kunststoff-Schicht c) eine Polycarbonat-Schicht ist.

10. Verbundsystem gemäß zumindest einem der vorherigen Ansprüche, **dadurch gekennzeichnet, dass** die Glas- oder Kunststoff-Schicht c) eine Dicke im Bereich von 20 bis 3000 µm aufweist.
und/oder
dass die Polymerblend-Schicht a) eine Dicke im Bereich von 10 bis 2000 µm aufweist.

11. Verbundsystem gemäß zumindest einem der vorherigen Ansprüche, **dadurch gekennzeichnet, dass** die Polymerblend-Schicht a) auf die Glas- oder Kunststoff-Schicht c) aufgebracht worden ist, vorzugsweise durch Laminierung.

12. Verbundsystem gemäß zumindest einem der vorherigen Ansprüche, **dadurch gekennzeichnet, dass** die Polymerblend-Schicht a) und/oder die Glas- oder Kunststoff-Schicht c) ein- oder beidseitig funktionale Beschichtungen, vorzugsweise Kratzfestbeschichtungen, Antireflex-Beschichtungen und/oder antistatische Beschichtungen aufweisen.

13. Verbundsystem gemäß Anspruch 12, **dadurch gekennzeichnet, dass** es sich bei den Beschichtungen um Kratzfestbeschichtungen, vorzugsweise um thermisch oder UV-vernetzte Lacke auf Basis von (Meth)Acrylaten oder Silikonen, handelt.

14. Verbundsystem gemäß zumindest einem der vorherigen Ansprüche, **dadurch gekennzeichnet, dass** es sich um eine Mehrschichtfolie in Form einer Abdeckung oder einer Verscheibung oder in Form eines Teiles eines Displays, einer Abdeckung, eines Touch Screens oder einer Verscheibung handelt.

15. Display, **dadurch gekennzeichnet, dass** dieses Display ein Verbundsystem gemäß zumindest einem der Ansprüche 1 bis 14 enthält.

16. Verwendung eines Styrol-Maleinsäureanhydrid-(Co)Polymers
wobei der Anteil an Maleinsäureanhydrid-Wiederholungseinheiten in dem Styrol-Maleinsäureanhydrid-(Co)Polymer 10 bis 30 Gew.-%, bezogen auf das Gesamtgewicht des Styrol-Maleinsäureanhydrid-(Co)Polymers, beträgt,
und
wobei das Styrol-Maleinsäureanhydrid-(Co)Polymer hergestellt ist aus einer Monomermischung umfassend Styrol, Maleinsäureanhydrid und 0 bis 50 Gew.-% mit Styrol und / oder Maleinsäureanhydrid copolymerisierbaren Vinylmonomere, bezogen auf das Gesamtgewicht an Maleinsäureanhydrid im Styrol-Maleinsäureanhydrid-(Co)Polymer,
zur Reduktion der Verwerfung eines Displays, einer Displayabdeckung, eines Touch Screens oder einer Verscheibung.

17. Verwendung eines Verbundsystems gemäß zumindest einem der Ansprüche 1 bis 14 als optisches Anzeigenelement oder in einem optischen Anzeigenelement.

## Claims

1. Composite system comprising:
- a) a polymer blend layer comprising or consisting of
A) a (meth)acrylate (co)polymer or a mixture of (meth)acrylate (co)polymers and
B) a styrene-maleic anhydride (co)polymer,
wherein the proportion of repeat maleic anhydride units in the styrene-maleic anhydride (co)polymer B) is 10 to 30% by weight, based on the total weight of the styrene-maleic anhydride (co)polymer B), and
wherein the proportion of repeat maleic anhydride units in the polymer blend layer a) is 1 to 27% by weight, based on the total weight of the polymer blend layer a), and
wherein the styrene-maleic anhydride (co)polymer B) has been prepared from a monomer mixture comprising styrene, maleic anhydride and 0 to 50% by weight of vinyl monomers copolymerizable with styrene and/or maleic anhydride, based on the total weight of maleic anhydride in the styrene-maleic anhydride (co)polymer B),
- b) optionally one or more adhesive layers, glass layers and/or optical films, preferably one or more adhesive layers, and
- c) a glass or polymer layer, preferably a polymer layer,
wherein a) and c) are bonded to one another or the one or more layers b) bond the two layers a) and c) to one another.

2. Composite system according to Claim 1, wherein A) is formed to an extent of at least 30% by weight, based on the total weight of A), of repeat methyl methacrylate units.

3. Composite system according to Claim 1 or 2, **characterized in that** the composition to be polymerized for preparation of A) comprises one or more of the following monomers copolymerizable with methyl methacrylate and/or (meth)acrylates:
alkyl (meth)acrylates, methyl acrylate, ethyl acrylate, butyl acrylate, cyclohexyl (meth)acrylate, norbornyl (meth)acrylate, (meth)acrylic acid, glutaric anhydride, styrene, maleic anhydride, n-isopropyl(meth)acrylamide, (meth)acrylamide, vinylcyclohexane, acrylonitrile, vinyl acetate and substituted styrenes.

4. Composite system according to at least one of the preceding claims, **characterized in that** the styrene-maleic anhydride (co)polymer B) has a proportion of repeat styrene units of 55 to 90% by weight, based on the total weight of the styrene-maleic anhydride (co)polymer B).

5. Composite system according to at least one of the preceding claims, **characterized in that** A) has a mean molecular weight of at least M_{w} = 50 000 g/mol and/or B) has a mean molecular weight of at least M_{w} = 40 000 g/mol.

6. Composite system according to at least one of the preceding claims, **characterized in that** a composition of which the polymer blend layer a) is composed has a Vicat softening temperature VET (ISO 306-B50) of at least 110°C.

7. Composite system according to at least one of the preceding claims, **characterized in that** the polymer blend layer a) comprises UV stabilizers, UV absorbers, lubricants, antistats, flame retardants, additives for increasing scratch resistance, antioxidants, light stabilizers, organic phosphorus compounds, weathering stabilizers and/or plasticizers, each in a proportion of 0.001 to 5% by weight, based in each case on the total weight of the polymer blend layer a).

8. Composite system according to at least one of the preceding claims, **characterized in that** the weight ratio of A) to B) is in the range from 10:90 to 90:10.

9. Composite system according to at least one of the preceding claims, **characterized in that** the glass or polymer layer c) is a polycarbonate layer.

10. Composite system according to at least one of the preceding claims, **characterized in that** the glass or polymer layer c) has a thickness in the range from 20 to 3000 µm
and/or
the polymer blend layer a) has a thickness in the range from 10 to 2000 µm.

11. Composite system according to at least one of the preceding claims, **characterized in that** the polymer blend layer a) has been applied to the glass or polymer layer c), preferably by lamination.

12. Composite system according to at least one of the preceding claims, **characterized in that** the polymer blend layer a) and/or the glass or polymer layer c) has functional coatings on one or both sides, preferably scratch-resistant coatings, anti-reflection coatings and/or antistatic coatings.

13. Composite system according to Claim 12, **characterized in that** the coatings are scratch-resistant coatings, preferably thermally crosslinked or UV-crosslinked coating materials based on (meth)acrylates or silicones.

14. Composite system according to at least one of the preceding claims, **characterized in that** it is a multilayer film in the form of a cover or of a glazing system or in the form of part of a display, of a cover, of a touchscreen or of a glazing system.

15. Display, **characterized in that** this display comprises a composite system according to at least one of Claims 1 to 14.

16. Use of a styrene-maleic anhydride (co)polymer
wherein the proportion of repeat maleic anhydride units in the styrene-maleic anhydride (co)polymer B) is 10 to 30% by weight, based on the total weight of the styrene-maleic anhydride (co)polymer B),
and
wherein the styrene-maleic anhydride (co)polymer B) has been prepared from a monomer mixture comprising styrene, maleic anhydride and 0 to 50% by weight of vinyl monomers copolymerizable with styrene and/or maleic anhydride, based on the total weight of maleic anhydride in the styrene-maleic anhydride (co)polymer,
for reduction of the warpage of a display, of a display cover, of a touchscreen or of glazing.

17. Use of a composite system according to at least one of Claims 1 to 14 as a visual display element or in a visual display element.

## Revendications

1. Système composite comprenant :
a) une couche de mélange de polymères comprenant ou constituée par
A) un (co)polymère de (méth)acrylate ou un mélange de (co)polymères de (méth)acrylate et
B) un (co)polymère de styrène/anhydride de l'acide maléique,
la proportion d'unités récurrentes d'anhydride de l'acide maléique dans le (co)polymère de styrène/anhydride de l'acide maléique B) étant de 10 à 30% en poids, par rapport au poids total du (co)polymère de styrène/anhydride de l'acide maléique B), et
la proportion d'unités récurrentes d'anhydride de l'acide maléique dans la couche de mélange de polymères a) étant de 1 à 27% en poids, par rapport au poids total de la couche de mélange de polymères a), et
le (co)polymère de styrène/anhydride de l'acide maléique B) étant préparé à partir d'un mélange de monomères comprenant du styrène, de l'anhydride de l'acide maléique et 0 à 50% en poids de monomères de vinyle copolymérisables avec le styrène et/ou l'anhydride de l'acide maléique, par rapport au poids total d'anhydride de l'acide maléique dans le (co)polymère de styrène/anhydride de l'acide maléique B),
b) éventuellement une ou plusieurs couches adhésives, couches de verre et/ou feuilles optiques, de préférence une ou plusieurs couches adhésives, et
c) une couche de verre ou de matériau synthétique, de préférence une couche de matériau synthétique,
a) et c) étant reliés l'un à l'autre ou ladite une ou lesdites plusieurs couches b) reliant les deux couches a) et c) l'une à l'autre.

2. Système composite selon la revendication 1, A) étant constitué à raison d'au moins 30% en poids, par rapport au poids total de A), d'unités récurrentes de méthacrylate de méthyle.

3. Système composite selon la revendication 1 ou 2, **caractérisé en ce que** la composition à polymériser pour la préparation de A) comprend un ou plusieurs des monomères suivants copolymérisables avec le méthacrylate de méthyle et/ou des (méth)acrylates : (méth)acrylates d'alkyle, acrylate de méthyle, acrylate d'éthyle, acrylate de butyle, (méth)acrylate de cyclohexyle, (méth)acrylate de norbornyle, acide (méth)acrylique, anhydride de l'acide glutarique, styrène, anhydride de l'acide maléique, n-isopropyl(méth)acrylamide, (méth)acrylamide, vinylcyclohexane, acrylonitrile, acétate de vinyle et styrènes substitués.

4. Système composite selon au moins l'une quelconque des revendications précédentes, **caractérisé en ce que** le (co)polymère de styrène/anhydride de l'acide maléique B) présente une proportion d'unités récurrentes de styrène de 55 à 90% en poids, par rapport au poids total du (co)polymère de styrène/anhydride de l'acide maléique B).

5. Système composite selon au moins l'une quelconque des revendications précédentes, **caractérisé en ce que** A) présente un poids moléculaire moyen d'au moins M_{w} = 50.000 g/mole et/ou B) présente un poids moléculaire moyen d'au moins M_{w} = 40.000 g/mole.

6. Système composite selon au moins l'une quelconque des revendications précédentes, **caractérisé en ce qu'**une composition, qui compose la couche de mélange de polymères a), présente une température de ramollissement de Vicat VST (ISO 306-B50) d'au moins 110°C.

7. Système composite selon au moins l'une quelconque des revendications précédentes, **caractérisé en ce que** la couche de mélange de polymères a) contient des stabilisants aux UV, des absorbants des UV, des lubrifiants, des antistatiques, des agents ignifuges, des additifs pour augmenter la résistance aux rayures, des antioxydants, des stabilisants à la lumière, des composés phosphorés organiques, des agents de protection contre les agents atmosphériques et/ou des plastifiants, à chaque fois en une proportion de 0,001 à 5% en poids, par rapport au poids total de la couche de mélange de polymères a).

8. Système composite selon au moins l'une quelconque des revendications précédentes, **caractérisé en ce que** le rapport pondéral de A) à B) se situe dans la plage de 10:90 à 90:10.

9. Système composite selon au moins l'une quelconque des revendications précédentes, **caractérisé en ce que** la couche de verre ou de matériau synthétique c) est une couche de polycarbonate.

10. Système composite selon au moins l'une quelconque des revendications précédentes, **caractérisé en ce que** la couche de verre ou de matériau synthétique c) présente une épaisseur dans la plage de 20 à 3000 µm et/ou **en ce que** la couche de mélange de polymères a) présente une épaisseur dans la plage de 10 à 2000 µm.

11. Système composite selon au moins l'une quelconque des revendications précédentes, **caractérisé en ce que** la couche de mélange de polymères a) a été appliquée sur la couche de verre ou de matériau synthétique c), de préférence par laminage.

12. Système composite selon au moins l'une quelconque des revendications précédentes, **caractérisé en ce que** la couche de mélange de polymères a) et/ou la couche de verre ou de matériau synthétique c) présente des revêtements fonctionnels sur une face ou double face, de préférence des revêtements de résistance aux rayures, des revêtements antireflet et/ou des revêtements antistatiques.

13. Système composite selon la revendication 12, **caractérisé en ce qu'**il s'agit, pour les revêtements, de revêtements de résistance aux rayures, de préférence de laques réticulées par voie thermique ou par les UV, à base de (méth)acrylates ou de silicones.

14. Système composite selon au moins l'une quelconque des revendications précédentes, **caractérisé en ce qu'**il s'agit d'une feuille multicouche sous forme d'une protection ou d'un vitrage ou sous forme d'une partie d'un affichage, d'une protection, d'un écran tactile ou d'un vitrage.

15. Affichage, **caractérisé en ce que** cet affichage contient un système composite selon au moins l'une quelconque des revendications 1 à 14.

16. Utilisation d'un (co)polymère de styrène/anhydride de l'acide maléique, la proportion d'unités récurrentes d'anhydride de l'acide maléique dans le (co)polymère de styrène/anhydride de l'acide maléique étant de 10 à 30% en poids, par rapport au poids total du (co)polymère de styrène/anhydride de l'acide maléique et le (co)polymère de styrène/anhydride de l'acide maléique étant préparé à partir d'un mélange de monomères comprenant du styrène, de l'anhydride de l'acide maléique et 0 à 50% en poids de monomères de vinyle copolymérisables avec le styrène et/ou l'anhydride de l'acide maléique, par rapport au poids total d'anhydride de l'acide maléique dans le (co)polymère de styrène/anhydride de l'acide maléique, pour la réduction du gauchissement d'un affichage, d'une protection d'affichage, d'un écran tactile ou d'un vitrage.

17. Utilisation d'un système composite selon au moins l'une quelconque des revendications 1 à 14, comme élément d'affichage optique ou dans un élément d'affichage optique.
